# EUROPEAN PATENT APPLICATION

(11) **EP 4 446 373 A1**
(43) Date of publication of application: **16.10.2024**
(21) Application number: 22904204.9
(22) Date of filing: 06.12.2022
(51) Int. Cl.: C08J 99/00, C08B 37/00, D01F 9/00

(54) **NETWORK STRUCTURE BODY, METHOD FOR PRODUCING SAME, BETA-1,3-GLUCAN BEADS, AND METHOD FOR PRODUCING SAME**

(30) Priority: 10.12.2021 JP 2021200614
(71) Applicant: National Institute of Advanced Industrial Science and Technology, Chiyoda-ku Tokyo 100-8921 (JP)
(72) Inventor: SHIBAKAMI, Motonari, Tsukuba-shi, Ibaraki 305-8560 (JP)
(74) Representative: Murgitroyd & Company
(86) International application number: PCT/JP2022/044818
(87) International publication number: WO 2023/106276

(57) **Abstract**

A novel network structure body formed from sub-micron fibrils containing β-1,3-glucan and a method for producing the same are provided. β-1,3-glucan beads and a method for producing the same are provided.

The network structure body includes a web structure in which fibrils containing β-1,3-glucan and having an average fiber diameter larger than 100 nm and smaller than 1000 nm extend linearly while connecting with each other to delimit web holes. The fibrils preferably delimit web holes by extending in straight lines or in curved lines while connecting in a serial manner.

## Description

### TECHNICAL FIELD

The present invention relates to a network structure body and a method for producing the same, and to β-1,3-glucan beads and a method for producing the same.

### BACKGROUND

In recent years, fibers having β-1,3-glucan as their raw materials, as represented by paramylon, have been gaining interest as naturally occurring fibers having little environmental impact. Paramylon is a storage polysaccharide produced by *Euglena,* formed by approximately 2,000 glucose units being linked by β-1,3 bonds, which is present in *Euglena* cells in the form of granules having a diameter of a few microns. Patent Document 1 proposes a fibrilized paramylon obtained by fibrilizing paramylon granules by shearing. Non-Patent Document 1 describes putting β-1,3-glucan in a single-stranded state (randomly coiled state) in an aqueous sodium hydroxide solution, then reducing the sodium hydroxide concentration by means of water so that a stable triplex structure is constructed (dilution method), thereby forming nanofibers.

Patent Document 1: WO 2018/116936 A1

Non-Patent Document 1: Carbohydrate Polymers, 2013, vol. 93, pp. 499-505

### SUMMARY OF INVENTION

The fibrilized paramylon in Patent Document 1 is described as being in an assembled state due to multiple fibrillar bodies becoming entangled with each other. Additionally, it is described as having a web-like structure in which multiple fibrillar bodies assemble to form a network. The nanofibers in Non-Patent Document 1 are assemblages that are based on the self-organizing capability inherent in paramylon. Randomly coiled paramylon dispersed in a solution assembles together to form nanofibers. However, the fiber diameters thereof remain on the order of tens of nanometers, and it is difficult to form sub-micron fibrils having fiber diameters exceeding 100 nm. Additionally, branching structures are not observed in the respective nanofibers, and the respective nanofibers do not share portions of their structures with other nanofibers. Therefore, web structures are not formed.

A problem addressed by the present invention is to provide a novel network structure body formed from sub-micron fibrils containing β-1,3-glucan and a method for producing the same. Another problem addressed by the present invention is to provide β-1 ,3-glucan beads and a method for producing the same.

The present invention includes the embodiments below.
[1] A network structure body including a web structure in which fibrils containing β-1 ,3-glucan and having an average fiber diameter larger than 100 nm and smaller than 1000 nm extend linearly while connecting with each other to delimit web holes.
[2] The network structure body according to [1], wherein the fibrils delimit web holes by extending in straight lines or in curved lines while connecting in a serial manner.
[3] The network structure body according to [1] or [2], wherein the fibrils delimit web holes by extending linearly while branching.
[4] The network structure body according to [3], wherein the fibrils are separated from other fibrils between branch points.
[5] The network structure body according to any one of [1] to [4], wherein the web structure is formed by having two or more of the web holes in succession.
[6] The network structure body according to any one of [1] to [5], wherein the web structure is formed by three or more of the web holes being in contact with each other.
[7] The network structure body according to any one of [1] to [6], wherein the number of ends of the fibrils in the web structure is ten or fewer in one field of view observed at 2,000-times magnification by a scanning electron microscope.
[8] A method for producing the network structure body according to any one of [1] to [7], the method including dripping a β-1,3-glucan solution containing a β-1,3-glucan raw material and a good solvent into a poor solvent to obtain β-1,3-glucan beads.
[9] The method according to [8], further including fibrillating the β-1,3-glucan beads.
[10] The method according to [8] or [9], wherein the good solvent contains one or more solvents selected from among aprotic solvents and ionic liquids.
[11] The method according to any one of [8] to [10], wherein the poor solvent contains an alcohol.
[12] The method according to any one of claims [8] to [11], wherein the fibrillation includes shearing in the poor solvent.
[13] β-1,3-glucan beads include a web structure in which fibrils containing β-1,3-glucan and having an average fiber diameter larger than 100 nm and smaller than 1000 nm extend linearly while connecting with each other to delimit web holes.
[14] A method for producing β-1,3-glucan beads including dripping a β-1,3-glucan solution containing a β-1,3-glucan raw material and a good solvent into a poor solvent.

According to the present invention, a novel network structure body formed from sub-micron fibrils comprising β-1,3-glucan and a method for producing the same can be provided. According to the present invention, β-1,3-glucan beads and a method for producing the same can be provided.

### BRIEF DESCRIPTION OF DRAWINGS

FIG. 1 is a schematic diagram illustrating how, starting from paramylon granules, a web structure is formed by sub-micron fibrils.
FIG. 2 shows photographs of examples of β-1 ,3-glucan beads, where (a) is a photograph taken by a household digital camera, and (b) is a scanning electron microscope photograph taken at 50-times magnification.
FIG. 3 shows scanning electron microscope photographs of cross-sections of a β-1 ,3-glucan bead, where (a) is a photograph taken at 50-times magnification, (b) is a photograph taken at 2,000-times magnification, (c) is a photograph taken at 3,000-times magnification, (d) is a photograph taken at 5,000-times magnification, and (e) is a photograph taken at 10,000-times magnification.
FIG. 4 shows a scanning electron microscope photograph, taken at 2,000-times magnification, of a cross section of a β-1 ,3-glucan bead in a region located closer to the center than the region in FIG. 3.
FIG. 5 shows scanning electron microscope photographs of examples of network structure bodies obtained after fibrillation of β-1 ,3-glucan beads, where (a) is a photograph taken at 100-times magnification, (b) is a photograph taken at 1,000-times magnification, and (c) is a photograph taken at 2,000-times magnification.
FIG. 6 shows scanning electron microscope photographs, taken at 500-times magnification, of a network structure body obtained in Example 1, where (a) is a photograph of the network structure body obtained by immersing paramylon beads in ethanol for 1 hour, then performing a fibrillation treatment for 20 minutes, and (b) is a photograph of a network structure body obtained by immersing paramylon beads in ethanol for 3 hours, then performing a fibrillation treatment for 10 minutes.
FIG. 7 shows a scanning electron microscope photograph, taken at 500-times magnification, of a network structure body obtained in Example 2.
FIG. 8 shows a scanning electron microscope photograph, taken at 500-times magnification, of a network structure body obtained in Example 3.
FIG. 9 shows a scanning electron microscope photograph, taken at 500-times magnification, of a network structure body obtained in Example 4.
FIG. 10 shows a scanning electron microscope photograph, taken at 2,000-times magnification, of what was obtained in Comparative Example 1.
FIG. 11 shows a scanning electron microscope photograph, taken at 500-times magnification, of what was obtained in Comparative Example 2.
FIG. 12 shows a scanning electron microscope photograph, taken at 500-times magnification, of what was obtained in Comparative Example 3.
FIG. 13 is a graph regarding the frequency dependence of the storage modulus and the loss modulus of a polylactic acid-paramylon sub-micron fibril network composite.

### DESCRIPTION OF EMBODIMENTS

Hereinafter, an embodiment of the present invention will be explained in detail. The present invention is not limited to the embodiment below, and can be implemented by introducing changes, as appropriate, within a range not hindering the effects of the present invention. In cases in which specific explanations describing an embodiment also apply to another embodiment, the explanation may sometimes be omitted for the other embodiment.

### [Network structure body]

The network structure body according to the present embodiment includes a web structure (hereinafter also referred to as a "network") in which fibrils (also referred to as "sub-micron fibrils" or simply as "fibrils" in the present specification) containing β-1,3-glucan and having an average fiber diameter larger than 100 nm and smaller than 1000 nm extend linearly while connecting with each other to delimit web holes. A network structure body having such characteristics has been heretofore unknown.

The "network structure body" refers to an article having, in at least a portion of the surface and/or the interior thereof, a web structure that is observable by a scanning electron microscope at at least one magnification from 100-times to 10,000-times magnification.

The "web structure" is formed by two or more web holes assembling.

The "web holes" are composed of fibrils and voids surrounded by the fibrils when observed by a scanning electron microscope at at least one magnification from 100-times to 10,000-times magnification. In a scanning electron microscope photograph, fibrils are observed as line-shaped regions, and voids are observed as dark shadows. The shapes of the voids in the web holes are not limited, and may include circular shapes, elongated circular shapes, cocoon shapes, polygonal shapes with rounded corners, and the like.

The expression "extend linearly while connecting" means that the fibrils extend linearly while sharing portions with each other. In a state in which fibrils are assembled together and entangled, yet are simply in physical contact with each other, the fibrils are not connected with each other.

The expression "delimit" means that the fibrils define regions. Web holes that are adjacent to each other share at least one fibril in at least a portion thereof.

A web structure in which fibrils extend linearly while connecting with each other to delimit web holes will form a robust network that does not disintegrate even when dispersed in water or in a resin, and thus can form a network structure body having excellent strength. Additionally, since the fibrils already form a network, further aggregation does not occur, and aggregation does not tend to occur when dispersed in water or in a resin. As a result thereof, a network structure body having excellent dispersibility in water or in a resin can be obtained.

In contrast therewith, paramylon granules are known to be formed by independent fibrillar bodies having a fiber diameter of approximately 4 nm being arrayed parallel to each other (e.g., Amer. J. Bot. 74(6), 877 (1987, etc.), and the fibrillar bodies do not construct dense networks inside the paramylon granules. For this reason, in fibrillar paramylon in a state in which fibrillar bodies are simply physically entangled with each other, produced by a conventional top-down method, the entanglement thereof is constantly changing, for example, when in the state of dispersion in an aqueous solution, and when an external force is applied, the mechanical stability of the fibrillar bodies with respect to the external force is low.

### (Fibrils)

The fibrils contain β-1,3-glucan and have an average fiber diameter larger than 100 nm and smaller than 1000 nm. Fibrils having an average fiber diameter larger than 100 nm and smaller than 1000 nm are also called sub-micron fibrils. The fibrils are preferably obtained by fibrilizing β-1,3-glucan.

β-1,3-glucan refers to a polysaccharide having a structure in which glucose is linked by β-1,3 bonds. That is, β-1,3-glucan has a structure formed by β-1,3-glucoside bonds between the 1-position in a glucose and the 3-position in a different glucose. The expression "β-1,3-glucan" includes β-1,3-glucan and derivatives thereof. In one embodiment, the derivatives may have a hydrogen atom in one or more hydroxyl groups in the β-1,3-glucan substituted by another group. β-1,3-glucan is mainly produced by algae, bacteria, and the like.

In one embodiment, the β-1,3-glucan preferably has the structure represented by the following Formula (1):

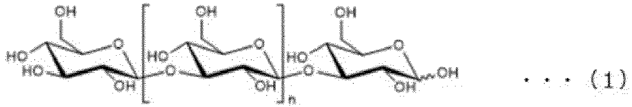

In Chemical Formula (1), n represents an integer from 60 to 3,000, where n is preferably 500 to 2,800, more preferably 700 to 2,500, even more preferably 800 to 2,200, and particularly preferably 1,000 to 2,000. Paramylon, which is synthesized and stored by *Euglena,* is a β-1,3-glucan in which normally 1,500 to 2,000 glucose units are linked by β-1,3 bonds.

In one embodiment, the β-1 ,3-glucan preferably contains paramylon. In one embodiment, the β-1 ,3-glucan is paramylon. In one embodiment, the β-1 ,3-glucan can include paramylon and a β-1 ,3-glucan other than paramylon.

The average fiber diameter of the fibrils is larger than 100 nm and smaller than 1000 nm, preferably from 200 to 990 nm, more preferably from 300 to 950 nm, even more preferably from 400 to 950 nm, yet more preferably 430 to 900 nm, and particularly preferably 430 to 700 nm.

The average fiber diameter is determined by measuring the fiber width at three locations on twenty arbitrary fibrils in a field of view at 2,000-times magnification in a scanning electron microscope, and taking the average value thereof. In the present specification, a fibril extending between one branch point and another branch point in a web structure is counted as a single fibril.

In nanofibers produced by a conventional bottom-up method as in Non-Patent Document 1, sets of three randomly coiled β-1 ,3-glucan molecules form triplex structures in water, and these further self-assemble into bundles to a thickness on the order of a few nm to a few tens of nm. In the network structure body according to the present embodiment, the nanofibers further assemble to form sub-micron fibrils that are thicker than conventional nanofibers, and further form web structures by connecting with each other so as to extend in the lengthwise direction.

Fibrilized paramylon produced by a conventional top-down method as in Patent Document 1 is obtained by fibrillating paramylon granules that are a few microns in diameter by mechanical shearing. Thus, the length of each fibrillar body does not exceed the length of the fibrillar bodies in the natural state constituting the paramylon granules. When the present inventors observed a scanning probe microscope photograph taken of a nanofiber in a single-stranded state obtained by fibrillating paramylon granules by immersion in a solvent (solvent name: dimethyl sulfoxide (DMSO)), the length thereof was approximately 3 µm and the width was approximately 40 nm. Additionally, since fibrilized paramylon produced by a top-down method is fibrillated by shearing, they do not undergo a process in which the respective fibrillar bodies share portions of each other, as in the self-organization in the bottom-up method. That is, the fibrilized paramylon produced by the top-down method cannot form a web structure by the fibrils extending linearly by connecting with each other.

Fibrilized paramylon produced by a conventional top-down method as in Patent Document 1 is merely in a state in which multiple fibrillar bodies are assembled together by being entangled with each other. Thus, it is characterized in that the fibrillar bodies are not connected with each other, and when observed by a microscope, there are many breaks (ends of the fibrillar bodies) in the web structure, there are few gaps between the fibrillar bodies, and the like.

In one embodiment, the fibrils preferably delimit web holes by extending in straight lines or in curved lines while connecting in a serial manner. In one embodiment, the fibrils preferably form a web structure by forming a chain. The expression "form a web structure by forming a chain" means that the fibrils are consecutively arrayed to form a single web structure.

In one embodiment, boundaries between the respective fibrils are preferably not observed when the fibrils are observed at 500-times magnification (preferably at 2,000-times magnification) with a scanning electron microscope.

In one embodiment, the fibrils preferably delimit web holes by extending linearly while branching. In this case, a web structure has two or more branch points. By extending linearly while branching, two or more adjacent web holes tend to be delimited.

In this embodiment, the fibrils are preferably separated from other fibrils between branch points. When the fibrils are separated from other fibrils between branch points, the fibrils are not entangled with each other. The straight-line distance between adjacent branch points is not limited and is preferably 0.5 to 100 µm, more preferably 0.5 to 100 µm, more preferably 0.5 to 50 µm, and even more preferably 2 to 20 µm.

In one embodiment, the fibrils are preferably not entangled with each other. In one embodiment, the fibrils are preferably observed as a single fibrillar body between branch points when observed at 500-times magnification (more preferably 2,000-times magnification) with a scanning electron microscope. When observed as a single fibrillar body, the fibrils are not entangled with each other.

In one embodiment, the fibrils may extend while forming spaces with respect to other fibrils in the width direction. When forming spaces with respect to other fibrils in the width direction, the fibrils are not entangled with each other. The spaces may be annular regions, may be irregularly shaped regions, or may be rectangular regions.

In one embodiment, the fibrils preferably form a web structure by connecting seamlessly.

### (Web structure)

The web structure is formed by two or more web holes delimited by fibrils. The web structure is preferably in a state in which many web holes delimited by fibrils are assembled together. When many web holes are assembled together, a network structure body having a more robust network can be formed. Examples of web structures in a state in which many web holes delimited by fibrils are assembled together include the embodiments below.

That is, in one embodiment, a web structure is preferably formed by having two or more web holes delimited by fibrils in succession. In this case, "formed by having two or more web holes in succession" means that two or more adjacent web holes are successively arrayed to form a single web structure. In one embodiment, the web structure may have two or more web holes of different sizes disposed adjacent to each other.

In one embodiment, the web structure preferably has three or more web holes in contact with each other.

In one embodiment, the web structure preferably has a structure in which the web holes are densely concentrated. The expression "densely concentrated" means that many web holes (voids in the web holes) are assembled together.

In one embodiment, the web holes are preferably arranged to extend in a planar direction and in one or more directions intersecting the planar direction at a certain angle. A web structure composed of web holes arranged to extend in the planar direction and in one or more directions intersecting the planar direction at a certain angle can be considered to be a web structure in which many web holes are assembled together from all directions.

Fibrilized paramylon produced by a conventional top-down method as in Patent Document 1 is in a state in which multiple fibrillar bodies are assembled together by being entangled with each other, and does not have a web structure having two or more adjacent web holes.

As for nanofibers produced by a conventional bottom-up method as in Non-Patent Document 1, the respective nanofibers assemble to form bundles and become entangled, yet do not have a web structure having two or more adjacent web holes.

A web structure in which many web holes are assembled together has a high percentage of voids in the web holes. In one embodiment, the percentage of voids in the web holes in the web structure, in terms of the percentage of the area obtained by binarization with image processing software in a field of view measuring 64 microns × 48 microns in a scanning electron microscope, should preferably be 90% or higher, and more preferably 95% or higher.

Meanwhile, in a network structure body that is assembled in a spherical form as in the β-1,3-glucan beads mentioned below, the voids in the web holes are sometimes crushed in regions near the surface. In one embodiment, the percentage of voids in the web holes in the web structure, in terms of the percentage of the area obtained by binarization with image processing software in a field of view measuring 64 microns × 48 microns in a scanning electron microscope, may be 50% or lower.

In one embodiment, the size of the voids in the web holes, in terms of the maximum distance of the inner diameter, should preferably be 0.5 to 100 µm, more preferably 0.5 to 50 µm, and even more preferably 0.5 to 20 µm. In one embodiment, there should more preferably be a higher percentage of small voids that are 1 µm or smaller, more preferably approximately 0.5 µm to 1 µm. By having a web structure in which there are many small voids, a network structure body having a more robust network (web structure) can be obtained.

In one embodiment, the number of ends of fibrils in the web structure within one field of view observed at 2,000-times magnification by a scanning electron microscope should preferably be ten or fewer, more preferably eight or fewer, even more preferably five or fewer, and particularly preferably zero. In the case in which the number of ends of fibrils is ten or fewer, a network structure body with a more robust network (web structure) having few breaks between fibrils can be obtained.

### (Network structure body)

The network structure body is an article having, in at least a portion of the surface and/or the interior thereof, a web structure that is observable by a scanning electron microscope at at least one magnification from 100-times to 10,000-times magnification. The network structure body includes at least one of the above-mentioned web structures. The network structure body may have a region not having web holes aside from the above-mentioned web structure, and may have regions in which the fibrils are densely concentrated without gaps therebetween, regions in which the fibrils are entangled with each other, and the like.

The size of the network structure body is not limited and may be a size set in accordance with the intended use. In one embodiment, the shape of the network structure body may be various shapes, such as bead-shaped, powder-shaped, sheet-shaped (membranous), or a shape in which these are mixed. For example, the network structure body may include powdered or spherical grains (beads) having an average grain size of 1 to 3 mm or 0.5 to 5 mm, and/or a crushed product thereof. The average grain size is determined by measuring the diameters (maximum straight-line distance) of ten arbitrarily chosen network structure bodies in a field of view at 2,000-times magnification in a scanning electron microscope, and taking the average value thereof. In one embodiment, the network structure body may, in a non-limiting manner, be in the form of a membrane that is 100 to 1,000 mm × 100 to 1,000 mm in size.

### (Use)

The network structure body according to the present embodiment does not tend to aggregate and has excellent dispersibility in water or in a resin, and thus can be favorably used, for example, as a resin filler (reinforcement material).

In the network structure body according to the present embodiment, the fibrils are connected with each other, and thus, the fibrils are linked to each other by sharing portions of each other so that a high-density and highly crosslinked network having high mechanical strength is formed. The network structure body has excellent mechanical strength and can therefore be favorably used as a functional separation membrane or as another membrane material.

The network structure body according to the present embodiment is a sub-micron fibril network composed of 100% natural components, and thus can be used as a biodegradable filler. Furthermore, a robust network can be maintained even in water, and therefore, the network structure body also has water resistance. Thus, it can be used as a water-resistant network structure body.

### [Network structure body production method]

In the network structure body production method according to the present embodiment, natural β-1,3-glucan nanofibers constituting β-1,3-glucan raw materials such as paramylon granules are not directly used as fiber constituent components. Instead, they are first dissolved in a good solvent to obtain a β-1,3-glucan solution with a random coil conformation, then dripped in a poor solvent, thereby preparing beads in which randomly coiled β-1,3-glucan is accommodated in spherical volumes in a highly concentrated state, and forming network structures in the beads.

That is, the network structure body production method according to the present embodiment includes:
(step 1) dripping a β-1,3-glucan solution (hereinafter also referred to simply as "β-1,3-glucan solution") containing a β-1,3-glucan raw material and one or more solvents selected from among aprotic solvents and ionic liquids into a poor solvent to obtain β-1,3-glucan beads.

### (Dissolving step)

The network structure body production method according to the present embodiment may have, before step 1, a step for preparing a β-1,3-glucan solution as needed. The β-1,3-glucan solution can be obtained by dissolving a β-1,3-glucan raw material into a good solvent. A "good solvent" means a solvent that can dissolve a β-1,3-glucan raw material.

Examples of good solvents include aprotic solvents, ionic liquids, deep eutectic solvents, and the like. The good solvent preferably includes one or more solvents selected from the above, more preferably includes one or more solvents selected from among aprotic solvents and ionic liquids, and even more preferably includes an aprotic solvent.

Aprotic solvents, ionic liquids, and deep eutectic solvents can fibrillate and dissolve β-1 ,3-glucan raw materials into randomly coiled molecular chains, and thereafter, by being dripped into a poor solvent, can form a robust network of sub-micron fibrils. In contrast therewith, when an alkaline solution such as a sodium hydroxide aqueous solution is used, although the β-1 ,3-glucan raw material can be dissolved, a robust network cannot be formed by sub-micron fibrils even if the solution is thereafter dripped into a poor solvent, as demonstrated by the comparative examples mentioned below.

In one embodiment, the β-1 ,3-glucan raw material preferably has a structure represented by the following Formula (1):

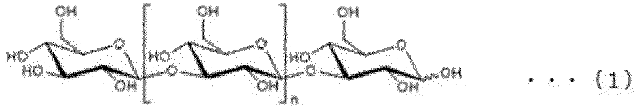

In Chemical Formula (1), n represents an integer from 60 to 3,000. The value of n is preferably 500 to 2,800, more preferably 700 to 2,500, even more preferably 800 to 2,200, and particularly preferably 1,000 to 2,000.

The β-1 ,3-glucan raw material, from the aspect of reducing the environmental impact, is preferably of biological origin, and is more preferably from a plant. In particular, it is preferable to use, as the raw material, a β-1,3-glucan separated from microalgae that synthesize β-1 ,3-glucan intracellularly. The microalgae are preferably *Euglena* (microalgae belonging to the *Euglena* plant phylum). This is because *Euglena* can be easily cultured, has a fast growth cycle, and stores large quantities of paramylon granules intracellularly. The paramylon that is synthesized and stored by *Euglena* is a β-1,3-glucan normally formed by 1,500 to 2,000 glucose units being linked by β-1,3 bonds. The β-1,3-glucan, such as paramylon, can be separated from microalgae by means of a conventional method.

In one embodiment, the β-1 ,3-glucan preferably contains paramylon. In one embodiment, the β-1 ,3-glucan is paramylon. In one embodiment, the β-1 ,3-glucan can contain paramylon and a β-1,3-glucan other than paramylon.

Aprotic solvents include, for example, acetone, N,N-dimethylacetamide, N,N-dimethylformamide (DMF), dimethyl sulfoxide (DMSO), and the like.

Ionic liquids include known ionic liquids obtained by combining a positively charged compound with a negatively charged compound, examples of which include 1-allyl-3-methylimidazolium chloride, 1-ethyl-3-methylimidazolium acetate, N,N-diethyl-N-(2-methoxyethyl)-N-methylammonium 2-methoxyacetate, and the like.

Deep eutectic solvents include, for example, choline chloride/zinc chloride, and the like.

In one embodiment, the good solvent preferably contains dimethyl sulfoxide (DMSO), and a mixed solvent of dimethyl sulfoxide (DMSO) and another aprotic solvent can also be used. For example, a mixed solvent of dimethyl sulfoxide (DMSO) and methanol, or a mixed solvent of dimethyl sulfoxide (DMSO) and water may be used.

In one embodiment, in the case in which the good solvent contains N,N-dimethylacetamide, a mixed solvent of N,N-dimethylacetamide and lithium chloride (inorganic salt) is preferably used.

The method for dissolving the β-1,3-glucan raw material into the good solvent is not limited. For example, the β-1,3-glucan raw material may be put in a good solvent and dissolved by being stirred, as needed, using a magnetic stirrer, and the like, at 10 to 60°C, preferably at 20 to 30°C, for 1 to 72 hours, preferably for 10 to 24 hours.

The concentration of the β-1,3-glucan raw material in the β-1,3-glucan solution is preferably 1 to 12 wt%, and more preferably 4 to 10 wt%.

### (Step 1: β-1,3-glucan bead production step)

In step 1, β-1,3-glucan beads are obtained by dripping, into a poor solvent, a β-1,3-glucan solution containing β-1,3-glucan and one or more solvents selected from among aprotic solvents and ionic liquids. When the β-1,3-glucan solution is dripped into the poor solvent, spherical grains (also called "β-1,3-glucan beads" in the present specification) containing β-1,3-glucan are quickly formed.

In this case, a "poor solvent" means a solvent in which β-1,3-glucan does not dissolve. Poor solvents include water; alcohols such as methanol, ethanol, n-propanol, and 2-propanol; halogen-based solvents such as chloroform, dichloromethane, carbon tetrachloride, and 1,2-dichloroethane; ethyl acetate;, acetonitrile; tetrahydrofuran; pyridine; acetone; DMF; petroleum ether; toluene, and the like. In one embodiment, the poor solvent preferably contains an alcohol, and more preferably contains ethanol. In one embodiment, a mixed solvent of water and alcohol can be used as the poor solvent. In one embodiment, a mixed solvent of different types of alcohol (e.g., a mixed solvent of ethanol and methanol) can be used as the poor solvent.

The β-1,3-glucan beads production step is preferably performed at 4 to 60°C, more preferably at 10 to 40°C, and even more preferably at 20 to 30°C, preferably while stirring the poor solvent.

The total dripped amount of the β-1,3-glucan solution is not limited and may, for example, be 0.01 to 10 g per 50 mL of the poor solvent.

The size of the droplets is not limited, and can be determined by the size of a mouth of equipment, such as a pipette or a nozzle, that is used, in accordance with the size required for the obtained β-1,3-glucan beads.

One embodiment preferably includes immersing the β-1,3-glucan beads in a poor solvent. For example, after dripping the β-1,3-glucan solution into a poor solvent, it is preferable to keep the obtained β-1,3-glucan beads immersed in the poor solvent, preferably in a state in which the poor solvent is stirred. By immersing the β-1,3-glucan beads in the poor solvent, the poor solvent can more easily penetrate into the interior of the β-1,3-glucan beads, thereby forming a more robust network.

The time period during which the β-1,3-glucan beads are immersed in the poor solvent is preferably 0.1 to 72 hours, more preferably 0.5 to 10 hours, and even more preferably 1 to 3 hours.

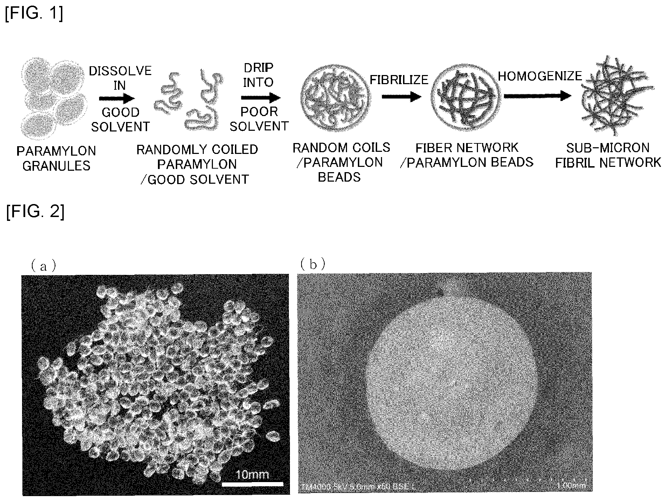

FIG. 1 is a schematic diagram illustrating a network being formed by sub-micron fibrils in the case in which paramylon granules are used as the β-1 ,3-glucan raw material. As illustrated in FIG. 1, randomly coiled paramylon is formed in the β-1 ,3-glucan solution. By dripping this β-1 ,3-glucan solution into a poor solvent, spherical grains (beads) are formed. The beads accommodate a high concentration of randomly coiled β-1 ,3-glucan. The good solvent in the beads is gradually substituted by the poor solvent, and the randomly coiled β-1 ,3-glucan that is encapsulated gradually comes into contact with the poor solvent. As a result thereof, the self-organizing capability of the β-1 ,3-glucan is exercised and fibrilization occurs. Since the randomly coiled β-1 ,3-glucan is accommodated in the beads in a highly concentrated state, sub-micron fibrils that are thicker than the conventional nanofibers having a diameter of 20 nanometers described in Non-Patent Document 1 are formed, and multiple sub-micron fibrils form chains while sharing constituent portions with each other, thereby forming a high-density and highly crosslinked spherical network (web structure) having few breaks.

The size of the β-1 ,3-glucan beads formed in step 1 can be adjusted to various sizes in accordance with the size of the liquid droplets when dripping, into the poor solvent, the solution obtained by dissolving β-1,3-glucan into a good solvent. For example, the β-1 ,3-glucan beads may have an average grain size of 10 µm to 10 mm, 0.5 to 5 mm, or 1 to 3 mm, in accordance with the size of the mouth of a pipette or a nozzle. Beads having a diameter on the order of centimeters can also be produced by using equipment with an even larger pouring mouth. The size of the obtained network structure body can be adjusted by adjusting the size of the beads. The average grain size is determined by measuring the diameters (maximum straight-line distance) of ten arbitrarily chosen grains in a field of view at 2,000-times magnification in a scanning electron microscope, and taking the average value thereof.

FIG. 2 shows scanning electron microscope photographs of β-1 ,3-glucan beads obtained by using paramylon granules. FIG. 2(b) is an enlarged photograph of a single grain in FIG. 2(a). As shown in FIG. 2(a) and (b), the β-1 ,3-glucan beads are round and approximately circular in plan view. The diameter of the β-1,3-glucan beads illustrated in FIG. 2 is approximately 1 millimeter, and is about 10⁷ times larger than the diameter of paramylon granules, which is a few microns. Thus, the size of the high-density and highly crosslinked networks (web structures) that are constructed can also be on the order of centimeters.

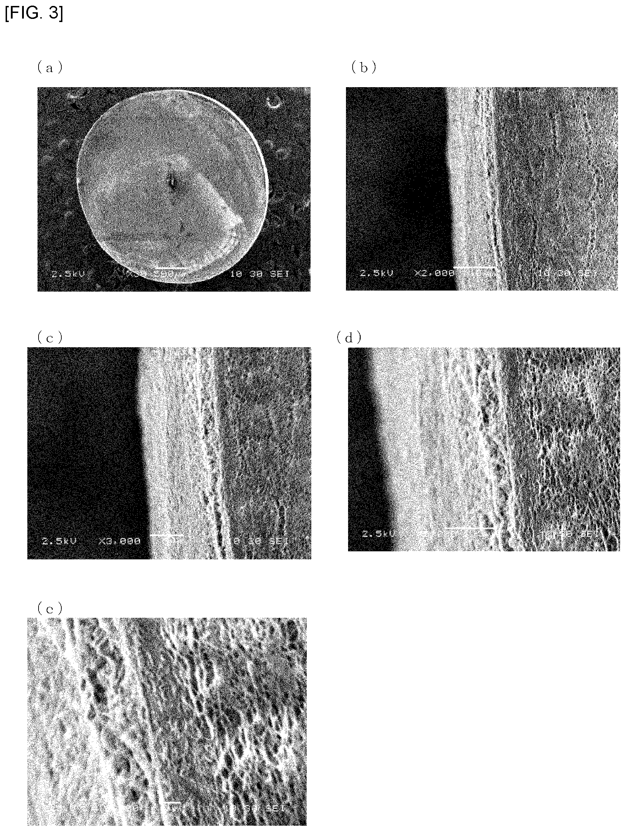

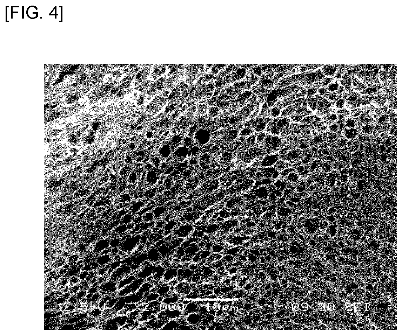

FIG. 3 and 4 show scanning electron microscope photographs of cross-sections of β-1 ,3-glucan beads obtained by using paramylon granules. FIG. 3 and 4 show photographs obtained by slicing, with a knife, β-1 ,3-glucan beads obtained by using paramylon granules, then quick-freezing the beads in liquid nitrogen and observing them with a scanning electron microscope. FIG. 3(a) to (e) shows photographs obtained by observing the same grain at different magnifications. FIG. 4 shows a photograph in which the network formation state of sub-micron fibrils in a β-1,3-glucan bead is observed in a region different from that in FIG. 3.

As illustrated in FIG. 3(a) to (e), in the interiors of the β-1,3-glucan beads, fibrils are formed and networks are formed by the fibrils being linked to each other. That is, the β-1,3-glucan beads are network structure bodies that are assembled in a spherical shape.

As illustrated in FIG. 3(b) to (d), networks of fibrils are also formed on the surfaces of the grains. As a result thereof, it was found that the β-1,3-glucan beads have undergone fibrilization across the entire region including the interior and the surface, and a high-density and highly crosslinked network is formed.

As shown in FIG. 4, inside the β-1 ,3-glucan beads, web holes delimited by fibrils are densely concentrated to form a high-density and highly crosslinked network.

### (Step 2: Fibrillation treatment step)

Following the above-mentioned step 1, the β-1,3-glucan beads can be subjected to a fibrillation treatment as needed. By performing a fibrillation treatment, the high-density sub-micron fiber networks constructed in the β-1,3-glucan beads can be fibrillated to obtain a network structure body in which relatively large web holes are exposed at the surfaces.

The fibrillation treatment may, for example, involve fibrillation by shearing the β-1,3-glucan beads, the shearing treatment preferably being performed in a poor solvent. The poor solvent is as described above. When performing step 2 following step 1, the poor solvent used in step 1 can be used as is.

The shearing treatment is not limited and can be performed by a known method using known equipment, and can be a mechanical shearing treatment such as, for example, a homogenization treatment, or a pulverization/powdering treatment such as a water jet process, a ball mill process, or a grinder process.

In one embodiment, the fibrillation treatment preferably includes performing a homogenization treatment on the β-1,3-glucan beads in water. The homogenization treatment can be performed by using known equipment such as a homogenizer.

The fibrillation treatment temperature should preferably be 4 to 40°C. The fibrillation treatment time should preferably be 1 to 60 minutes, more preferably 3 to 30 minutes, and even more preferably 5 to 20 minutes.

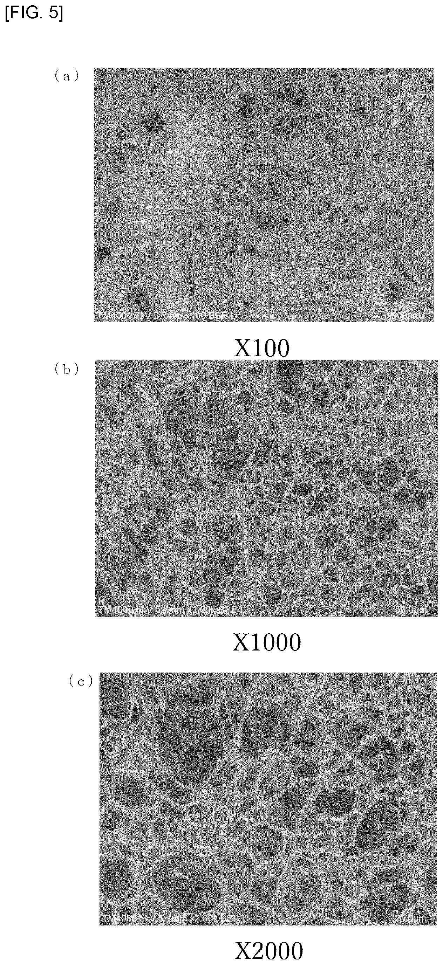

FIG. 5 shows scanning electron microscope photographs of a network structure body obtained after a fibrillation treatment. This network structure body was obtained by dripping a β-1,3-glucan solution into a poor solvent, then immersing the β-1,3-glucan for 3 hours while stirring (step 1), and performing a homogenization treatment for 20 minutes in water. FIG. 5(a) to (c) show photographs taken, respectively, at 100-times, 1,000-times, and 2,000-times magnification. The scales indicated at the bottom right in FIG. 5 are in units of 500 µm in FIG. 5(a), 50.0 µm in FIG. 5(b), and 20.0 µm in FIG. 5(c).

The network structure body shown in FIG. 5 forms a web structure due to fibrils (sub-micron fibrils) having an average fiber diameter larger than 100 nm and smaller than 1,000 nm connecting to each other and extending linearly to delimit two or more adjacent web holes. The respective fibrils form chains, thereby forming a web structure. The fibrils are not entangled with each other, nor do they appear to be assembled into bundles. The fibrils are connected by sharing portions thereof with other fibrils. Almost all of the fibrils are linked with other fibrils. Web holes constructed by the fibrils sharing constituent portions can be observed everywhere.

The web structures shown in FIG. 5 have two or more adjacent web holes respectively delimited by one or more fibrils. The web structures are spread out in a honeycomb-like manner. The web structures are formed by having many large and small voids in the web holes in succession. The web structures have many small web holes in which the size of the voids is approximately 0.5 µm to 20 µm. The percentage of voids in the web holes in the web structure shown in FIG. 5(c) is 90% or higher in terms of the percentage of the area obtained by binarization with image processing software in a field of view measuring 64 microns × 48 microns in a scanning electron microscope. The number of breaks in the web structure in FIG. 5(c) was ten or fewer in a field of view observed at 2,000-times magnification by a scanning electron microscope.

Such structural characteristics contribute to increased mechanical strength of the networks, and is a characteristic that is not observed in fibrillar bodies obtained by mechanical shearing of paramylon granules, which is conventional art. Furthermore, a robust network is constructed, allowing aggregation of the sub-micron fibrils with each other to be avoided.

### (Other steps)

The network structure body production method according to the present embodiment may have, as needed, a rinsing step, a drying step, a chemical modifying step, and the like, based on known methods, after step 2.

### [β-1,3-glucan beads]

The β-1 ,3-glucan beads according to the present embodiment include a web structure in which fibrils containing β-1,3-glucan and having an average fiber diameter larger than 100 nm and smaller than 1000 nm extend linearly while connecting with each other to delimit web holes. The expression "β-1 ,3-glucan beads" means spherical grains containing β-1,3-glucan. The expression "spherical" means being round in plan view. In one embodiment, a face of one β-1 ,3-glucan bead sliced through the center thereof is preferably substantially circular at any angle at which bead is sliced. In one embodiment, the β-1 ,3-glucan beads are network structure bodies that are assembled in a spherical shape.

As mentioned above, the β-1 ,3-glucan beads shown in FIG. 2(a) and (b) are round and substantially circular in plan view.

The web structures in the interiors of the β-1,3-glucan beads are as indicated above and in FIG. 3 and 4. The descriptions regarding the β-1 ,3-glucan and other descriptions regarding the β-1 ,3-glucan beads are also as indicated above.

The average grain size of the β-1 ,3-glucan beads is not limited, and can be adjusted by the size of the mouth of equipment, such as a pipette or a nozzle, used at the time of production. For example, the average grain size of the β-1,3-glucan beads may be 1 to 3 mm or 0.5 to 5 mm. In one embodiment, the average grain size of the β-1 ,3-glucan beads may be 10 µm to 10 mm. The average grain size is determined by measuring the diameters (maximum straight-line distance) of ten arbitrarily chosen grains in a field of view at 2,000-times magnification in a scanning electron microscope, and taking the average value thereof.

### [β-1,3-glucan beads production method]

The production method for the β-1 ,3-glucan beads according to the present embodiment involves dripping a β-1,3-glucan solution containing β-1 ,3-glucan and one or more solvents selected from among aprotic solvents and ionic liquids into a poor solvent. The specifics thereof are as described in step 1 (β-1 ,3-glucan beads production step) in the network structure body production method described above.

The β-1 ,3-glucan beads production method according to the present embodiment may have a step, prior to dripping the β-1 ,3-glucan solution into the poor solvent, of dissolving the β-1,3-glucan raw material into a solvent including one or more solvents selected from among aprotic solvents and ionic liquids as needed. The specifics thereof are as described in the dissolving step in the network structure body production method described above.

### EXAMPLES

Hereinafter, the present invention will be explained in further detail by indicating examples. However, the present invention should not be construed as being limited by these examples.

### [Example 1] Paramylon dope (1) (1.0 g/DMSO 10 mL)

*Euglena gracilis* (NIES-48, acquired from the National Institute for Environmental Studies) was cultured at 28°C for 4 days in a Koren-Hutner culture medium (pH 3.5), then the obtained *Euglena* cells were centrifugally separated and lyophilized. The dry powder that was obtained was dispersed in a 0.25 mol/L sodium hydroxide aqueous solution, then stirred for 2.5 hours at room temperature. A white solid that precipitated was repeatedly rinsed with water to obtain paramylon granules. The paramylon granules were subjected to lyophilization to obtain a dry powder. The powder was confirmed to be high-purity paramylon by means of ¹³C-NMR analysis (Bruker AVANCE 500).

The raw material paramylon granules obtained above, in an amount weighing 1.00 g, was dispersed in 10 mL of DMSO and dissolved by stirring with a stirrer bar, thereby preparing a paramylon dope (1) (homogeneous solution containing randomly coiled paramylon, with a paramylon concentration of 10 wt%) (dissolving step).

The paramylon dope (1) (1.38 g) was dripped into 50 mL of ethanol to make paramylon beads (step 1). The beads were stirred as is, and 1 hour later and another 3 hours later, approximately 80 mg (weight in wet state) of paramylon beads were respectively extracted and dispersed in 10 mL of Milli-Q water, then subjected to a homogenization treatment at room temperature with a homogenizer (model AHG-160A, shift generator HT1008, rotation speed 13,500 rpm, As One Corporation) (step 2). The paramylon beads that were extracted after 1 hour were subjected to the homogenization treatment for 20 minutes, and the paramylon beads that were extracted after 3 hours were subjected to the homogenization treatment for 10 minutes.

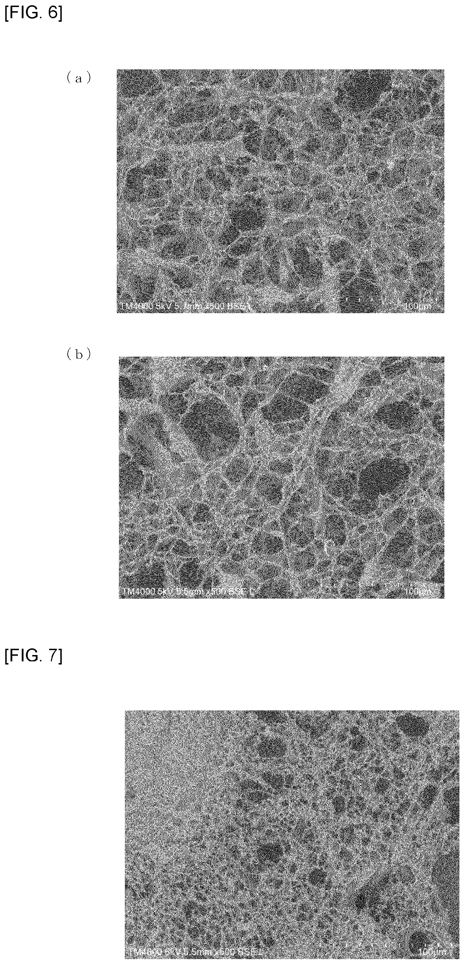

From each of the dispersions obtained after the homogenization treatments, 100 µL were extracted, and the shapes of solids contained in the dispersions were observed by a scanning electron microscope (TM4000, Hitachi High-Tech Corp.). The scanning electron microscope photographs (500-times magnification) are shown in FIG. 6.

FIG. 6(a) shows a scanning electron microscope photograph of a solid obtained by performing fibrillation for 20 minutes on paramylon beads obtained by dripping the paramylon dope (1) into ethanol, then stirring for 1 hour. FIG. 6(b) shows a scanning electron microscope photograph of a solid obtained by performing fibrillation for 10 minutes on paramylon beads obtained by dripping the paramylon dope (1) into ethanol, then stirring for 3 hours. As shown in FIG. 6, in both cases, a network composed of sub-micron fibrils having an average fiber diameter of 500 nm was observed, and a network structure body was obtained.

### [Example 2] Paramylon dope (2) (0.5 g/DMSO 10 mL)

Raw material paramylon granules prepared by the same method as that in Example 1, in an amount weighing 0.5 g, were dispersed in 10 mL of DMSO, then dissolved by stirring with a stirrer bar, thereby preparing a paramylon dope (2) (homogeneous solution containing randomly coiled paramylon, with a paramylon concentration of 5 wt%).

The paramylon dope (2) (1.07 g) was dripped into 50 mL of ethanol, and the resulting paramylon beads were stirred as is, extracted after 4 hours, subjected to a homogenization treatment for 20 minutes, and the shapes were observed with a scanning electron microscope (500-times magnification). The scanning electron microscope photograph is shown in FIG. 7. As shown in FIG. 7, a network composed of sub-micron fibrils with an average fiber diameter of 500 nm was observed, and a network structure body was obtained.

### [Example 3] Paramylon dope (3) (1.2 g/DMSO 10 mL)

Raw material paramylon granules prepared by the same method as that in Example 1, in an amount weighing 1.2 g, were dispersed in 10 mL of DMSO, then dissolved by stirring with a stirrer bar, thereby preparing a paramylon dope (3) (homogeneous solution containing randomly coiled paramylon, with a paramylon concentration of 12 wt%).

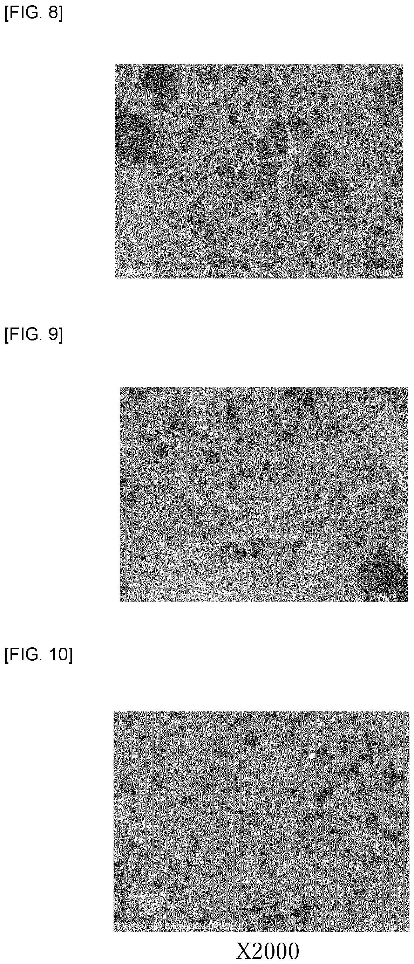

The paramylon dope (3) (1.36 g) was dripped into 50 mL of ethanol, and the resulting paramylon beads were stirred as is, extracted after 3 hours, subjected to a homogenization treatment for 20 minutes, and the shapes were observed with a scanning electron microscope (500-times magnification). The scanning electron microscope photograph is shown in FIG. 8. As shown in FIG. 8, a network composed of sub-micron fibrils with an average fiber diameter of 500 nm was observed, and a network structure body was obtained.

### [Example 4] Dry beads

Paramylon beads prepared from a paramylon dope (1) (1.0 g/DMSO 10 mL) prepared by the same method as that in Example 1 were air-dried to obtain dry beads from which the DMSO contained in the beads was all removed. After dispersing 49 mg of the dry beads in 10 mL of Milli-Q water, the beads were subjected to a homogenization treatment, extracted after 10 minutes, then the shapes thereof were observed with a scanning electron microscope (500-times magnification). The scanning electron microscope photograph is shown in FIG. 9. As shown in FIG. 9, a network composed of sub-micron fibrils with an average fiber diameter of 500 nm was observed, and a network structure body was obtained.

### [Comparative Example 1] Homogenization of natural paramylon granules

Raw material paramylon granules prepared by the same method as that in Example 1, in an amount weighing 12 mg, were dispersed in 10 mL of Milli-Q water, subjected to a homogenization treatment for 20 minutes, and the shapes thereof were observed with a scanning electron microscope. The scanning electron microscope photograph (2,000-times magnification) is shown in FIG. 10. As shown in FIG. 10, fibrous matter cannot be observed, and only paramylon granules are observed. From these results, it can be understood that the dissolution of the paramylon and immersion in a poor solvent (ethanol), which are included in the respective steps in Examples 1 to 4, are essential for constructing a sub-micron fibril network.

### [Comparative Example 2] Fibrilization from sodium hydroxide aqueous solution

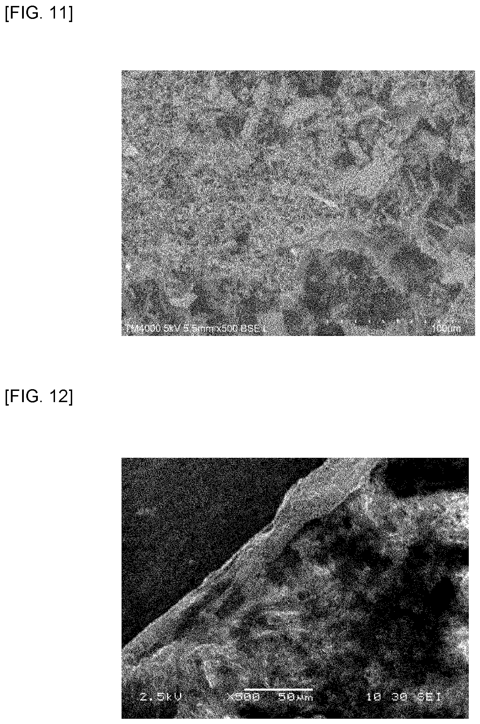

Raw material paramylon granules prepared by the same method as that in Example 1, in an amount weighing 503 mg, were dispersed in 10 mL of a 1 mol/L sodium hydroxide aqueous solution and stirred at room temperature until homogeneous. The resulting homogeneous solution was dripped while stirring into 100 mL of ethanol to obtain a white precipitate. This precipitate was separated by decantation, stirred while rinsing with 100 mL of ethanol (for 80 minutes), then stirred while rinsing with methanol (100 mL, approximately 60 min × 4 times), then dried with filter paper (dried by being sandwiched between filter paper to allow the moisture to be absorbed into the filter paper), then air-dried. The resulting solid, in the amount of 340 mg, was put in a test tube together with 10 mL of Milli-Q water, then placed at rest for 2 days (pH 7.54). The dispersion was homogenized, and 100 µL of the dispersion was removed after 10 minutes. The scanning electron microscope photograph (500-times magnification) is shown in FIG. 11. As shown in FIG. 11, what was obtained is an aggregate that is an irregular assemblage of fibrils, the majority of which have a length of approximately 10 µm, and a network is not formed. Thus, using a sodium hydroxide aqueous solution is not suitable for the construction of a sub-micron fibril network.

### [Comparative Example 3] Fibrilization from heated DMSO solution

Raw material paramylon granules prepared by the same method as that in Example 1, in an amount weighing 996 mg, were immersed in 10 mL of DMSO for 30 minutes, then heated and stirred for 3 hours at 90°C to obtain a homogeneous solution. Then, the obtained homogeneous solution was put in a Teflon (registered trademark) dish and cooled to room temperature to obtain 5.44 g of a gel solid containing DMSO. The sheet-shaped gel solid, weighing 113 mg, was dispersed in 10 mL of Milli-Q water, homogenized at room temperature, and 100 µL of the dispersion was extracted after 10 minutes. The scanning electron microscope photograph (JSM-6060, JEOL Ltd., 500-times magnification) is shown in FIG. 12. As shown in FIG. 12, only an amorphous aggregate was observed. Thus, in order to construct a sub-micron fibril network structure, dripping into a poor solvent of ethanol or the like, included in the paramylon beads preparation step, is essential.

### [Example 5] Composite of polylactic acid and paramylon sub-micron fibril network (polylactic acid/paramylon sub-micron fibril network composite)

Polylactic acid (NatureWorks Ingeo Biopolymer 10361D), in an amount weighing 8.6 g, and 0.96 g of a paramylon sub-micron fibril network prepared by vacuum-heat-drying (100°C for 8 hours) a network structure body obtained by the same method as that in Example 1 were kneaded (185°C for 10 minutes) with a Labo Plastomill (manufactured by Toyo Seiki Seisakusho, Ltd.) equipped with a compact segment mixer KF6 to obtain a composite of polylactic acid and a paramylon sub-micron fibril network. The composite of the polylactic acid and the paramylon sub-micron fibril network is a resin composition containing polylactic acid and a paramylon sub-micron fibril network.

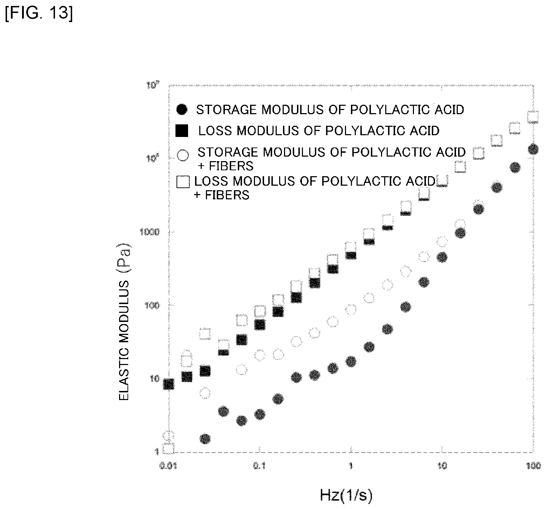

Regarding the kneaded sample that was obtained, the elastic moduli (storage modulus and loss modulus) were measured with a viscosity measurement device (MCR302, Anton Paar GmbH) while changing the frequency at the time of measurement from 0.01 Hz to 100 Hz. In a similar manner, the storage modulus and the loss modulus of polylactic acid were measured. The data are shown in FIG. 13. In FIG. 13, "Polylactic acid + fibers" represents the composite of polylactic acid and the paramylon sub-micron fibril network.

For the storage modulus (the white circles (∘) in FIG. 13) of the composite of polylactic acid and the paramylon sub-micron fibril network, a plateau region is observed at around 0.1 Hz. In this region, it is known that the following relationship arises between the storage modulus G and the material entanglement-converted molecular weight Me:
Me = ρRT/G (where ρ is the specific gravity 1, R is the gas constant, and T is the temperature).

In this case, substituting 71.1 Pa (88.3 - 17.2) as the difference between the "Storage modulus of polylactic acid + fibers" and the "Loss modulus of polylactic acid + fibers" at 0.1 Hz when ρ = 1,000 kg/m³, R = 8.31, and T = 300 K, then Me = 35,063. Since the molecular weight of the monomer units (glucose) in paramylon is 162 and 35,063/162 = 216, this mathematical equation suggests that one intersection occurs for every 216 units in terms of degree of polymerization. Since paramylon has a polymerization of approximately 2,000, which is approximately ten times 216, this demonstrates that paramylon constructs a dispersion structure having enough intersections to be able to provide reinforcement effects with respect to polylactic acid.

### INDUSTRIAL APPLICABILITY

The network structure body according to the present embodiment is industrially applicable as, for example, a resin filler (reinforcement material), as a functional separation membrane or other membrane material, as a biodegradable filler, as a water-resistant network structure body, and the like.

## Claims

1. A network structure body comprising:
a web structure in which fibrils containing β-1,3-glucan and having an average fiber diameter larger than 100 nm and smaller than 1000 nm extend linearly while connecting with each other to delimit web holes.

2. The network structure body according to claim 1, wherein the fibrils delimit web holes by extending in straight lines or in curved lines while connecting in a serial manner.

3. The network structure body according to claim 1 or 2, wherein the fibrils delimit web holes by extending linearly while branching.

4. The network structure body according to claim 3, wherein the fibrils are separated from other fibrils between branch points.

5. The network structure body according to any one of claims 1 to 4, wherein the web structure is formed by having two or more of the web holes in succession.

6. The network structure body according to any one of claims 1 to 4, wherein the web structure is formed by three or more of the web holes being in contact with each other.

7. The network structure body according to any one of claims 1 to 6, wherein the number of ends of the fibrils in the web structure is ten or fewer in one field of view observed at 2,000-times magnification by a scanning electron microscope.

8. A method for producing the network structure body according to any one of claims 1 to 7, the method comprising:
dripping a β-1 ,3-glucan solution containing a β-1 ,3-glucan raw material and a good solvent into a poor solvent to obtain β-1,3-glucan beads.

9. The method according to claim 8, further comprising fibrillating the β-1,3-glucan beads.

10. The method according to claim 8 or 9, wherein the good solvent contains one or more solvents selected from among aprotic solvents and ionic liquids.

11. The method according to any one of claims 8 to 10, wherein the poor solvent contains an alcohol.

12. The method according to any one of claims 8 to 11, wherein the fibrillation comprises shearing in the poor solvent.

13. β-1 ,3-glucan beads comprising:
a web structure in which fibrils containing β-1,3-glucan and having an average fiber diameter larger than 100 nm and smaller than 1000 nm extend linearly while connecting with each other to delimit web holes.

14. A method for producing β-1 ,3-glucan beads comprising:
dripping a β-1 ,3-glucan solution containing a β-1 ,3-glucan raw material and a good solvent into a poor solvent.
